(19) Europäisches Patentamt
European Patent Office
Office européen des brevets

(11) Veröffentlichungsnummer : **0 576 830 A1**

(12) # EUROPÄISCHE PATENTANMELDUNG

(21) Anmeldenummer : **93108480.0**

(22) Anmeldetag : **26.05.93**

(51) Int. Cl.[5] : **B01D 71/68,** B01D 67/00, C08G 75/23, C08G 65/48, C08L 81/06

(30) Priorität : **12.06.92 DE 4219218**

(43) Veröffentlichungstag der Anmeldung : **05.01.94 Patentblatt 94/01**

(84) Benannte Vertragsstaaten : **BE CH DE ES FR GB IT LI NL SE**

(71) Anmelder : **GAMBRO DIALYSATOREN GmbH & CO. KG**
**Holger-Crafoord-Strasse 26**
**D-72379 Hechingen (DE)**

(72) Erfinder : **Bell, Carl-Martin**
**Büsnauerstrasse 31A**
**W-7000 Stuttgart 80 (DE)**
Erfinder : **Deppisch, Reinhold**
**Graf-Friedrich-Weg 21**
**W-7450 Hechingen (DE)**
Erfinder : **Göhl, Hermann Josef**
**Ganswies 8**
**W-7457 Bisingen-Zimmern (DE)**

(74) Vertreter : **Weber, Dieter, Dr. et al**
**Weber, Dieter, Dr., Seiffert, Klaus, Dipl.-Phys., Lieke, Winfried, Dr. Postfach 61 45**
**D-65051 Wiesbaden (DE)**

(54) **Membran und Verfahren zu deren Herstellung.**

(57) Eine Membran besteht aus einem Polymer aus sich wiederholenden Einheiten der Formel

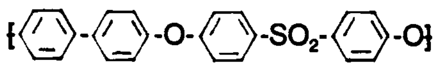

wobei die Arylreste derart durch Gruppen-$SO_3X$, worin X ein Wasserstoffatom oder Alkalimetallatom bedeutet, substituiert sind, daß pro Einheit der obigen Formel im Durchschnitt 0,03 bis 0,6 $SO_3X$-Reste vorliegen, und wird in der Weise hergestellt, daß man Polyphenylsulfon bestehend aus den obigen sich wiederholenden Einheiten in Lösung einer Konzentration von 5 bis 20 % (Gewicht/Volumen) in einem organischen Lösungsmittel mit Chlorsulfonsäure bei -20 bis +30 °C unter derartiger Abstimmung der Reaktionsbedingungen sulfoniert, daß pro Einheit der obigen Formel im Durchschnitt 0,07 bis 0,6 $SO_3H$-Reste vorliegen, das sulfonierte Polyphenylsulfon durch Zugabe eines Nichtlösungsmittels für das sulfonierte Polyphenylsulfon aus einer Lösung des letzteren in einem organischen Lösungsmittel in Membranform ausfällt, die Membran wäscht und gegebenenfalls die Sulfonsäuregruppen gegen Alkalimetall austauscht.

EP 0 576 830 A1

Die Erfindung betrifft permselektive Membranen, die beispielsweise in Verbindung mit bestimmten medizinischen Behandlungen eingesetzt werden können, wie für die Hämodialyse, Hämofiltration, Plasmapherese oder Immunotherapie. Auch können sie für eine Dialyse oder Ultrafiltration allgemein, wie beispielsweise zur Reinigung von Wasser, benutzt werden.

Permselektive Membranen unterschiedlicher chemischer Beschaffenheit sind für diese Anwendungszwecke bekannt. Beispielsweise kennt man aus den DE-OS 3 814 759 und 3 814 760 Membranen aus sulfonierten Polyethersulfonen mit sich wiederholenden Struktureinheiten der Formel

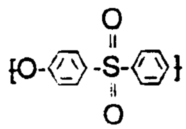

und mit einem Sulfonierungsgrad zwischen 0,01 und 0,6. Aus der US-PS 3 855 122 sind ebenfalls permselektive Membranen aus sulfonierten Polyarylethersulfonen bekannt. Diese besitzen sich wiederholende Einheiten der Formel

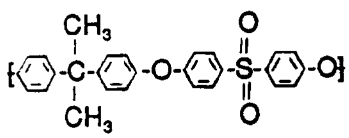

Die der Erfindung zugrundeliegende Aufgabe bestand nun darin, permselektive Membranen insbesondere für die Hämodialyse zu bekommen, die eine gegenüber bekannten Membranen verbesserte Eigenschaftskombination besitzen. Insbesondere wird angestrebt, Membranen mit Dampfsterilisierbarkeit, hoher Diffusionspermeabilitat und niedriger Aktivierung von Blutzellen zu erhalten.

Überraschenderweise bekommt man diesbezüglich eine extrem gute Eigenschaftskombination mit Membranen aus einem sulfonierten Polyarylethersulfon, die erfindungsgemäß dadurch gekennzeichnet sind, daß sie aus einem Polymer aus sich wiederholenden Einheiten der Formel

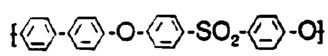

bestehen, wobei die Arylreste derart durch Gruppen $-SO_3X$ (X = H oder Alkalimetall) substituiert sind, daß pro Einheit der obigen Formel im Durchschnitt 0,03 bis 0,6 $SO_3X$-Reste vorliegen.

Die Endgruppen dieser Polymeren können Wasserstoffatome, Hydroxylgruppen oder auch $SO_3X$- Reste sein. Die sulfonierten Polyarylethersulfone, aus denen die erfindungsgemäßen Membranen bestehen, sind hydrophile Polymere. Sie verleihen den Membranen sehr hohe Diffusionspermeabilitäten, hohe thermische Stabilität und damit Dampfsterilisierbarkeit und niedrige Aktivierung von Blutzellen und sind frei von extrahierbaren Bestandteilen.

Bevorzugt sind solche sulfonierten Polyarylethersulfone, bei denen pro Einheit der obigen Formel im Durchschnitt 0,07 bis 0,50, besonders 0,15 bis 0,25 $SO_3X$-Reste vorliegen. Soweit in den $SO_3X$-Resten X nicht H bedeutet, bedeutet es bevorzugt ein Alkalimetall, besonders Natrium oder Kalium.

Die für die erfindungsgemäßen Membranen verwendeten sulfonierten Polyarylethersulfone besitzen vorzugsweise Molekulargewichte (Gewichtsmittel) im Bereich von 20 000 bis 70 000, besonders bevorzugt von 35 000 bis 50 000.

Die mit den Membranen nach der Erfindung erhaltene Eigenschaftskombination ist extrem gut insbesondere für Hämodialysezwecke und überraschend.

Die für die Membranherstellung verwendeten sulfonierten Polyarylethersulfone haben einen hohen Glasumwandlungspunkt. Beispielsweise besitzt ein erfindungsgemäß verwendetes sulfoniertes Polyphenylsulfon mit einem Sulfonierungsgrad von 0,45 einen Glasumwandlungspunkt von 224 °C, gemessen mit der Differential Scanning Colorimetry-Methode bei einer Aufheizgeschwindigkeit von 20 °C/min. Aufgrund dieser hohen thermischen Stabilität können die erfindungsgemäßen Membranen dampfsterilisiert werden, wozu sie bei 121 °C Wassertemperatur während eines Zeitraumes von 20 min im Dampfraum bei Überdruck beständig sein müssen.

Weiterhin besitzen die Membranen nach der Erfindung eine hohe Diffusionspermeabilität unter anderem für Substanzen, die bei der Hämodialyse entfernt werden müssen, wie Hamstoff. Üblicherweise wird die Diffusionspermeabilität für Chlorid als Vergleichsmaßstab herangezogen. Diese wird nach der folgenden Gleichung durch Messung der Konzentrationsveränderung von NaCl mit unterschiedlicher Konzentration in zwei durch die betreffende Membran getrennten Halbzellen berechnet.

$$P(Cl) = \frac{1}{A \,.\, t \,.\, (\frac{1}{V_1} + \frac{1}{V_2})} + \ln \frac{Co}{C_{tNaCl} - C_{tH_2O}} \quad (1)$$

In dieser Gleichung bedeuten A die Membranfläche, t die Diffusionszeit, $V_1$ und $V_2$ die Volumina der beiden Halbzellen, $c_o$ die Konzentration von NaCl zum Zeipunkt Null, $C_{tNaCl}$ die Konzentration von NaCl zum Zeipunkt t in der Halbzelle mit dem Natriumchlorid beim Beginn und $C_{tH2O}$ die Konzentration an NaCl zum Zeitpunkt t in der anderen Halbzelle.

Eine erfindungsgemäße Membran aus einem sulfonierten Polyphenylsulfonpolymer mit einem Sulfonierungsgrad von 0,5 besitzt eine Diffusionspermeabilität für Chlorid von 12 bis 14 x $10^4$ cm/s, während übliche Umkehrosmosemembranen, wie sie in der US-PS 3 855 122 beschrieben sind, Diffusionspermeabilitäten für Chlorid von weniger als 0,1 x $10^{-4}$ cm/s. bar haben.

Die hydraulische Permeabilität $Ll_p$) für die gleiche erfindungsgemäße Membran mit einem Sulfonierungsgrad von 50 % lag bei 5 bis 7 x $10^{-4}$ cm (s .bar).Diese wird mit einer Membran in Form eines flachen Bogens mit einer Fläche A von 26 $cm^2$ in einer Amicon-Membranzelle bestimmt, wobei mit Wasser bis zu 100 cm Hg unter Druck gesetzt wird. Die hydraulische Permeabilität $L_P$ berechnet sich nach der folgenden Gleichung:

$$L_p = \frac{m}{A \,.\, t \,.\, \Delta p} \quad (2)$$

In dieser bedeutet m die Masse Wasser, die die Membran in der Zeit t bei dem Transmembrandruck $\Delta p$ passiert.

Eine ganz wesentliche und überraschende Eigenschaft der erhaltenen Eigenschaftskombination bei den erfindungsgemäßen Membranen ist die niedrige Aktivierung von Blutzellen im Vergleich mit bekannten Dialysemembranen einschließlich sulfonierter Dialysemembranpolymere mit vergleichbarem Sulfonierungsgrad.

Zur Beurteilung der Wechselwirkung menschlicher mononukleärer Zellen (hauptsächlich Monozyten und Lymphozyten) in Suspension mit Zellkulturmedium (RPMI 1640, Biochrom, Berlin) in Gegenwart verschiedener Membranen wird folgendes Testverfahren angewendet: aus der Leukozytenfraktion von Gesamtblut dreier verschiedener Blutspender werden mononukleäre Zellen (Monozyten und Lymphozyten) durch Ficoll-Gradientenzentrifugierung isoliert. Die Zellen werden dreimal in RPMI 1640, das 100 µg/ml Penicillin und 100 U/ml Streptomycin enthält, gewaschen. Die isolierten Zellen (4 x $10^6$ Zellen/ml) werden in Berührung mit der betreffenden Membranen gebracht, die auf der Bodenseite eines Röhrenreaktors befestigt sind. Die Membranfläche ist 1,6 $cm^2$. Die Zellen (600 µl Suspension) werden 20 h bei 37 °C in 5 %iger $CO_2$-Atmosphäre inkubiert. Nach dieser Reaktionszeit wird die Freisetzung von Interleukin-1β durch eine spezifische ELISA-Technik im flüssigen Zellüberstand gemessen. Die Freisetzung von Interleukin-1β ist spezifisch für den Grad der Zellaktivierung bei Kontakt der Zelle mit einer Membranoberfläche.

Untersucht wurden erfindungsgemäße Membranen mit einem Sulfonierungsgrad von 0,15, 0,25 und 0,45. Als Vergleichsmembranen wurden eine handelsübliche Cuprophan-Membran und eine handelsübliche AN 69-Membran verwendet. Beide bekannten Membranen sind charakteristisch für stark hydrophile Membranen vom Geltyp für Hämodialyse bzw. Hämodiafiltration. Die AN 69-Membran besitzt einen Sulfonierungsgrad von 0,9 meq/g entsprechend dem Sulfonierungsgrad von 0,45 bei den hier beschriebenen Membranpolymeren aus sulfoniertem Polyphenylsulfon. In den Versuch wurde auch eine negative und positive Kontrolle für die Zellaktivierung einbezogen. Diese sind Blindproben ohne Membranen, nur im Reaktionsgefäß sowie mit durch Lipopolysaccharide (1 µg/ml) stimulierten Zellen, da Lipopolysaccharide als wirksame Aktivatoren für mononukleäre Zellen bekannt sind.

Obwohl die AN 69-Membran einen hohen Sulfonierungsgrad hat, ergibt sie ebenso wie eine Cuprophan-Membran eine wesentliche Zellaktivierung, während die erfindungsgemäßen Membranen mit einem Sulfonierungsgrad von 0,15, 0,25 und 0,45 keine bzw. praktisch keine Zellaktivierung ergaben. Die Ergebnisse finden sich in der nachfolgenden Tabelle 1.

**Tabelle 1**

| Interleukin-1β-Freisetzung aus mononukleären Zellen mit unterschiedlichen Dialysemembranen | |
|---|---|
| **Material der Dialysemembran** | **Interleukin-1β (pg/ml)** |
| Blindprobe (negative Kontrolle) | 20 |
| Lipopolysaccharide (positive Kontrolle) | 2500 |
| Sulfoniertes Polyphenylsulfon nach der Erfindung | |
| Sulfonierungsgrad 0,15 | 30 |
| Sulfonierungsgrad 0,25 | 30 |
| Sulfonierungsgrad 0,45 | 20 |
| Cuprophan | 340 |
| AN 69 | 300 |

Die erfindungsgemäßen Membranen besitzen eine charakteristische Membranstruktur, wobei innerhalb des angegebenen Sulfonierungsgradbereiches niedrigere Sulfonierungsgrade (z. B. 0,15) eine fingerartige Struktur, mittlere Sulfonierungsgrade (z. B. 0,25) eine Schaumstruktur und höhere Sulfonierungsgrade (z. B. 0,45) eine homogene Struktur ergeben.

Durch die Sulfonierung erfolgt bei den erfindungsgemäß eingesetzten Polyarylethersulfonen keine Molekulargewichtserniedrigung und damit kein Molekülabbau. Daraus resultieren Filmbildungseigenschaften der Polymerlösung, die für die Membranherstellung wichtig sind, da schlechte Filmbildungseigenschaften, wie sie bei den sulfonierten Polyarylethersulfonen gemäß den Beispielen der US-PS 3 855 122 vorliegen, Fehlstellen in der Membran ergeben, die ihrerseits zu einer Unbenutzbarkeit der Membran führen.

Eine bevorzugte Weiterbildung der Erfindung besteht darin, daß die wie oben gekennzeichnete erfindungsgemäße Membran zusätzlich durch Umsetzung der $SO_3X$-Gruppen mit einem polymeren Amin entweder mit primären oder sekundären Aminfunktionen oder mit gemischten sekundären und tertiären Aminfunktionen modifiziert ist.

Zweckmäßig ist die Membran so mit einem linearen Polyethylenimin mit sekundären Aminogruppen und mit Molekulargewichten zwischen 600 und 50 000 Dalton, vorzugsweise zwischen 1000 und 10 000 Dalton modifiziert. Dieses besitzt die Formel

$$\{CH_2\text{-}CH_2\text{-}NH\}_n$$

worin n eine Zahl bedeutet, die ein Molekulargewicht in dem obigen Bereich ergibt.

Das für die Modifizierung verwendete polymere Amin kann auch ein verzweigtes Polyethylenimin der Formel

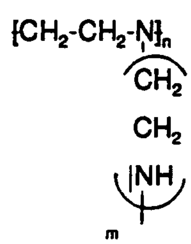

oder ein primäraminoterminales Polyethylenoxid/Polypropylenoxid der Formel

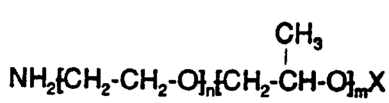

sein, worin X $CH_3$ oder $CH_2$-$CH_2$-$NH_2$ bedeutet und n und m wiederum solche Zahlen sind, daß das Molekulargewicht des polymeren Amins im Bereich zwischen 600 und 50 000, besonders 1000 und 10 000 Dalton beträgt.

Die erfindungsgemäße Modifizierung ergibt Membranen mit reaktiven primären oder sekundären Aminogruppen.

Die Oberflächen- und Bulk-Eigenschaften können durch eine Variation des Verhältnisses der $SO_3X$-Gruppen zu den Aminogruppen eingestellt werden. Wird die $SO_3$-X-Gruppendichte im angegebenen Bereich erhöht, erhöht sich die Hydrophilie der Membran, und es bilden mehr Aminogruppen eine ionogene Bindung zu den $SO_3X$-Gruppen.

Durch eine Erhöhung der Dichte der $SO_3X$-Gruppen auf der Oberfläche, z. B. durch Erhöhung des Sulfonierungsgrades innerhalb des angegebenen Bereiches, wird mehr polymeres Amin an die Oberfläche gebunden und eine Erhöhung der Hydrophilie der Oberfläche bewirkt. An die sekundären Aminogruppen kann nach der Methode der US-Patentschriften 4 565 740 und 4 613 665 bzw. gemäß O. Larm, R. Larson, P. Olsson, Biomat. Med. Dev. Artif. Org. 11 (2,3), Seiten 161 bis 173 (1983) mit hoher Oberflächenkonzentration Heparin kovalent gebunden werden.

Derartige Membranen mit über das polymere Amin gebundenem Heparin sind ebenfalls Gegenstand der Erfindung.

Die an der Oberfläche mit polymeren Aminen modifizierten Membranen zeichnen sich weiterhin dadurch aus, daß kein polymeres Amin aus wäßrigen Lösungen extrahiert werden kann. Sie haben in getrocknetem Zustand überraschenderweise eine deutlich erhöhte Hydrophilie gegenüber nicht mit polymeren Aminen modifizierten Membranen.

Die erfindungsgemäßen Membranen werden in der Weise hergestellt, daß man Polyphenylsulfon bestehend aus sich wiederholenden Einheiten der Formel

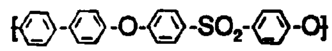

in Lösung in einer Konzentration von 5 bis 20 % (Gewicht/Volumen) in einem organischen Lösungsmittel mit Chlorsulfonsäure bei -20 °C bis 30 °C unter derartiger Abstimmung der Reaktionsbedingungen sulfoniert, daß pro Einheit der obigen Formel im Durchschnitt 0,03 bis 0,6 $SO_3X$-Reste vorliegen, das sulfonierte Polyphenylsulfon durch Zugabe eines Nichtlösungsmittels für das sulfonierte Polyphenylsulfon aus einer Lösung des letzteren in einem organischen Lösungsmittel in Membranform ausfällt, die Membran wäscht und gegebenenfalls den Wasserstoff der Sulfonsäuregruppen gegen Alkalimetall austauscht.

Die Membranen können in Form flacher Bögen oder als Hohlfasem gewonnen werden. Im ersteren Fall wird die Lösung des sulfonierten Polyphenylsulfons entweder als dünner Film, beispielsweise mit einer Dicke von 10 bis 100 µm, bevorzugt mit einer Dicke von 50 bis 60 µm, auf einem Substrat, wie einer Glasplatte, aufgebracht, wobei beispielsweise ein Rakel verwendet wird. Stattdessen kann der Film auch aus einer Schlitzdüse in ein Bad des Nichtlösungsmittels für das sulfonierte Polyphenylsulfon extrudiert werden. Bei der Herstellung von Hohlfasem wird die Lösung des sulfonierten Polyphenylsulfons durch eine Ringdüse in das Nichtlösungsmittel extrudiert, wobei aus einer Düse innerhalb der Ringdüse zusätzlich Nichtlösungsmittel für das sulfonierte Polyphenylsulfon ausgepreßt wird.

Die Sulfonierung erfolgt zweckmäßig bei einer Temperatur von -10 °C bis 25 °C, besonders zweckmäßig im Bereich von etwa 20 °C. Die Reaktionsbedingungen der Sulfonierung werden günstigerweise so eingestellt, daß vor der Ausfällung der Membran keine Gelierung und Vernetzung eintritt.

Bei dem erfindungsgemäßen Verfahren kann man entweder so vorgehen, daß man die bei der Sulfonierung entstehende Lösung des sulfonierten Polyphenylsulfons mit den oben angegebenen sich wiederholenden Einheiten ohne vorherige Ausfällung des Polymers oder Entfernung des Lösungsmittels direkt der Membranbildung durch Ausfällung aus der Lösung unterzieht. Stattdessen kann man aber auch so vorgehen, daß man aus der bei der Sulfonierung als Produkt anfallenden Lösung das sulfonierte Polyphenylsulfon zunächst mit einem Nichtlösungsmittel ausfällt, zweckmäßig danach wäscht und anschließend erneut in einem Lösungsmittel auflöst.

Als organisches Lösungsmittel für die Sulfonierung verwendet man zweckmäßig Methylenchlorid, 1,2-Dichlorethan, Chloroform oder Mischungen hiervon. Bevorzugt verwendet man Methylenchlorid. Die Löslichkeit von Polyphenylsulfon in diesen Lösungsmitteln und damit die Auflösungsgeschwindigkeit vor der Sulfonierung kann weiter erhöht werden, wenn man diesem Lösungsmittel für die Sulfonierung 0,1 bis 1 % (Volumen/Volumen) Dimethylsulfoxid zusetzt. Durch diesen Zusatz wird die Sulfonierungsreaktion nicht gestört.

Die Membranbildung erfolgt zweckmäßig nach einem an sich bekannten Phaseninversionsverfahren mit

Hilfe eines Nichtlösungsmittels für das Polymer, mit Hilfe dessen die Membran ausgefällt wird. Stattdessen kann man den beispielsweise auf einem Substrat, wie oben angegeben, aufgebrachten dünnen Film der Polymerlösung auch mit einem Gemisch eines Nichtlösungsmittels für das Polymer und eines Lösungsmittels für das Polymerlösungsmittel ausfällen. Dabei entsteht die gewünschte poröse Membranstruktur, wobei sich durch verschiedene Parameter die Porenstruktur einstellen läßt. Diese Parameter sind insbesondere die Polymerkonzentration, die Temperatur der Polymerlösung und des Nichtlösungsmittels und die Zusammensetzung des Nichtlösungsmittelsystems. Eine bevorzugte Temperatur bei der Membranbildung liegt im Bereich von etwa 20 °C.

Wenn für die Membranbildung nicht direkt die aus der Sulfonierung stammende Lösung verwendet wird, sondern das sulfonierte Polysulfon vor der Membranbildung ausgefällt wird, verwendet man für diese Ausfällung zweckmäßig als Nichtlösungsmittel Isopropanol, Aceton, Ethanol, Methanol, Essigsäure und/oder Essigsäureanhydrid. Das ausgefällte und gewaschene sulfonierte Polyphenylsulfon wird dann für die Membranherstellung zweckmäßig in N-Methylpyrrolidon, N,N-Dimethylacetamid, N,N-Dimethylformamid und/oder Dimethylsulfoxid gelöst. Das Nichtlösungsmittel für die Membranausfällung ist zweckmäßig Wasser, Aceton, Isopropanol, Methanol, Ethanol, Essigsäure, Essigsäureanhydrid oder ein Gemisch hiervon, bevorzugt Wasser.

Die bevorzugten aminmodifizierten Membranen werden in der Weise hergestellt, daß entweder das polymere Amin der Spinnlösung zugesetzt wird oder daß das sulfonierte Polyarylethersulfon mit einer Lösung des polymeren Amins behandelt wird. Bei Zusatz des polymeren Amins zu der Polymerlösung enthält diese zweckmäßig 5 bis 20 Gew.-%, besonders 8 bis 14 Gew.-% sulfoniertes Polyarylethersulfon und 0,5 bis 15 Gew.-% polymeres Amin. Das sulfonierte Polyarylethersulfon kann aber auch im festen Zustand mit einer wäßrigen Lösung des polymeren Amins, zweckmäßig im Konzentrationsbereich zwischen 0,5 und 50, besonders zwischen 0,5 und 5 % modifiziert werden.

Durch eine Erhöhung der Dichte der $SO_3X$-Gruppen an der Oberfläche des Polymers, z. B. durch Erhöhung des Sulfonierungsgrades im angegebenen Bereich, wird mehr polymeres Amin an die Oberfläche gebunden und eine Erhöhung der Hydrophilie der Oberfläche bewirkt. Durch Erhöhung der Konzentration des polymeren Amins in der Behandlungslösung wird bei gleicher Reaktionszeit eine Erhöhung der Menge des gebundenen polymeren Amins erreicht, bei Erniedrigung der Konzentration werden Sulfongruppen nicht aminofunktionalisiert und stehen für weitere Umsetzung zur Verfügung.

Anschließend an die Aminmodifizierung kann nach den oben genannten Methoden an die Membran Heparin kovalent gebunden werden.

Mit den beschriebenen Materialien und Methoden können Membranen mit verschiedenen Porengrößen (1 nm bis 50 μm) hergestellt und in unterschiedlichen Blutreinigungsverfahren, wie Hämodialyse, Hämofiltration, Plasmaphorese oder selektiven Adsorptionsbehandlungsverfahren, eingesetzt werden.

Durch die folgenden Beispiele wird die Erfindung weiter erläutert:

**Beispiel 1**

20 g Polyphenylsulfon mit den oben angegebenen sich wiederholenden Monomereinheiten wurden in 380 ml destilliertem Methylenchlorid aufgelöst und auf eine Temperatur im Bereich von -10 °C bis 22 °C gekühlt. Die spezielle Temperatur ist in der nachfolgenden Tabelle 2 angegeben. Verschiedene Menge destillierter Chlorsulfonsäure, wie in der Tabelle 2 angegeben, wurden in 60 ml destilliertem Methylenchlorid aufgelöst und gekühlt. Die beiden erhaltenen Lösungen wurden gleichzeitig in einen auf konstanter Temperatur zwischen -10 °C und 22 °C gehaltenen 1 l-Reaktionsbehälter unter heftigem Rühren während 1 h eingetropft. Nach vollständigem Vermischen wurde das Reaktionsgemisch eine weitere halbe Stunde gerührt und das erzeugte Polymer in kaltem Isopropanol ausgefällt, gründlich mit Isopropanol gewaschen, getrocknet und pulverisiert. Der Sulfonierungsgrad wurde durch Rücktitration einer Dispersion des Polymerproduktes in einer eingestellten alkalischen Methanollösung bestimmt und kann durch die Reaktionstemperatur und die Menge der verwendeten Chlorsulfonsäure (siehe Tabelle 2) gesteuert werden. Zusätzlich wurden Sulfat und Verdampfungsrückstand sowie die Ausbeute bestimmt.

Tabelle 2

| Vers. Nr. | - Temp. (°C) | Menge Chlorsulfonsaüre (Mol) | Sulfonierungsgrad | Sulfat (%) | Verdampfungsrückstand (%) | Ausbeute (%) |
|---|---|---|---|---|---|---|
| 1 | -10 | 0,02 | 0,07 | n.m. | n.m. | 85 |
| 2 | -10 | 0,05 | 0,15 | n.m. | n.m. | 86 |
| 3 | -10 | 0,1 | 0,50 | n.m. | n.m. | 86 |
| 4 | 22 | 0,02 | 0,12 | n.m. | n.m. | 99 |
| 5 | 22 | 0,04 | 0,28 | n.m. | n.m. | 81 |
| 6 | 22 | 0,05 | 0,40 | n.m. | n.m. | 85 |
| 7 | 22 | 0,06 | 0,47 | n.m. | n.m. | 86 |

Der Verdampfungsrückstand wurde durch Extrahieren des sulfonierten Polyphenylsulfons durch Dispergieren desselben während drei Tagen in Ispropanol, Abfiltrieren des Polymers, Verdampfen des Filtrats und Auswiegen des Rückstandes bestimmt. n. m. bedeutet, daß keine Rückstände ermittelt werden konnten.

**Beispiel 2**

Sulfoniertes Polyphenylsulfon wurde als eine 10 bis 19 gew.-%ige Lösung, bevorzugt 16 gew.-%ige Lösung in N-Methylpyrrolidon als Lösungsmittel unter Rühren bei Raumtemperatur während 3 h aufgelöst. Die Polymerlösung wurde durch eine 5 - 10 μm Teflon-Membran filtriert, 10 min mit Ultraschall behandelt, um die Lösung zu entgasen, mit einem Rakel auf eine Glasplatte gegossen und unmittelbar in einem Wasserbad ausgefällt. Die resultierende Membrandicke war etwa 50 μm.

Die Membran wurde durch Eintauchen während 1 bis 2 h in eine 1 m NaOH-Lösung in die $Na^+$-Form umgewandelt. Die resultierenden Membranen wurden vor und nach einer Dampfsterilisierung hinsichtlich der hydraulischen Permeabilität und der Diffusionspermeabilität für Chlorid mit einer 0,9 %igen NaCl-Lösung geprüft. Die Dampfsterilisierung erfolgte in einem Druckkessel, der auf 121 °C erhitzt war, während 20 min mit anschließendem langsamem Abkühlen.

Die hydraulische Permeabilität vor der Dampfsterilisierung lag bei 5 bis 7 x $10^{-4}$ cm (s . bar) nach der Dampfsterilisierung bei 4 bis 60 x $10^{-4}$ cm (s . bar). Die Diffusionspermeabilität für Chlorid lag vor der Dampfsterilisierung bei 12 bis 14 x $10^{-4}$ cm (s . bar), nach der Dampftterilisierung bei 12 bis 13 x $10^{-4}$ cm/s . bar. Es ist ersichtlich, daß durch die Dampfsterilisierung keine wesentliche Veränderung eintrat und die erfindungsgemäßen Membranen thermisch stabil und damit dampfsterilisierbar sind.

**Beispiel 3**

Membranen wurden aus sulfoniertem Polyphenylsulfon (siehe Beispiel 1) gemäß Beispiel 2 hergestellt.

Die Membranen wurden feucht in ein 2 % wäßrige Lösung des in Tabelle 3 angegebenen polymeren Amins eingelegt und über 6 h zur Reaktion gebracht, im weiteren über Nacht mit Wasser gespült, dampfsterilisiert und bei 45 °C auf Gewichtskonstanz getrocknet. Die so modifizierten Oberflächen ergaben zwei charakteristische Eigenschaften:

1. In getrocknetem Zustand bewirkte die Modifikation eine deutliche Erhöhung der Membranleistung (siehe Tabelle 3).
2. Die Membranoberflächen wiesen reaktive Aminogruppen auf, an die mit der oben zitierten Literatur hohe Mengen von Heparin gebunden werden können. Die Aminogruppen können durch Methylenblauanfärbung oder Titration qualitativ bzw. quantitativ erfaßt weden.

**Tabelle 3**

Membranleistungsdaten aus sulfoniertem Polyphenylsulfon mit unterschiedlichem Sulfonierungsgrad mit und ohne Modifikation mit polymerem Amin. Die Membran wurde aus 13 % Lösung in NMP durch Fällung in Wasser bei 20 °C hergestellt. Als polymeres Amin wurde Jeffamin M 715 der Firma Texaco, Hamburg verwendet.

| Sulfonierungsgrad [%] | Aminmodifikation | Lp [$10^{-4}$ cm/s.bar] | P(Cl) [$10^{-4}$ cm/s] |
|---|---|---|---|
| 12 | ohne | <1 | <0,1 |
| 12 | Jeffamin | 32 | 9,7 |
| 24 | ohne | <1 | 10,1 |
| 24 | Jeffamin | 6 | 7,1 |
| 22 | polymeres Amin mit sekundären Aminfunktionen | 5 | 1,0 |

Die Membranen wurden mit Wasser über 16 h bei 60 °C extrahiert und der Extrakt auf Jeffamin mit der Dragendorff-Analysenmethode (A. Berger, Zeitschrift für Analytische Chemie 196, 251 (1963) untersucht. Es wurde kein Jeffamin im Extrakt gefunden (Nachweisgrenze 0,1 mg/g Trockensubstanz).

**Beispiel 4**

Alternativ zu Beispiel 3 wurde das polymere Amin direkt in die Spinnlösung miteingelöst, und daraus wurden Membranen gemacht, die sowohl an der Oberfläche als auch in der Bulk-Phase reaktive primäre bzw. sekundäre Aminfunktionen tragen.

Die Membranen wiesen gegenüber Membranen ohne polymeres Amin ebenfalls erhöhte Membranleistungsdaten nach Membrantrocknung auf (siehe Tabelle 4). Das polymere Amin kann mit der Dragendorff-Methode auf der Membranoberfläche analytisch erfaßt werden.

**Tabelle 4**

Membranleistungsdaten aus sulfoniertem Polyphenylsulfon (sPESU) mit unterschiedlichem Sulfonierungsgrad mit und ohne Modifikation mit Jeffamin M 2070 in der Spinnlösung, hergestellt durch Fällung in Wasser bei 20 °C (Membran bei 45 °C auf Gewichtskonstanz getrocknet).

| Sulfonierungsgrad | Spinnlösung Zusammesetzung in NMP | Lp [$10^{-4}$ cm/s.bar] | P (Cl) [$10^{-4}$ cm/s] |
|---|---|---|---|
| 7 | 13 % PESU | 5 | <0,1 |
| 7 | 13,5 % sPESU, 3 % Jeffamin, 0,5 % Wasser | 150 | 12,6 |
| 12 | 13 % sPESU | <1 | <0,1 |
| 12 | 13 % sPESU, 5,4 % Jeffamin, 1,0 % Wasser | 120 | 11,1 |

**Patentansprüche**

1. Membran aus einem sulfonierten Polyarylethersulfon, **dadurch gekennzeichnet,** daß sie aus einem Polymer aus sich wiederholenden Einheiten der Formel

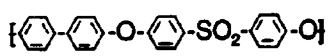

besteht, wobei die Arylreste derart durch Gruppen-$SO_3X$, worin X ein Wasserstoffatom oder Alkalimetallatom bedeutet, substituiert sind, daß pro Einheit der obigen Formel im Durchschnitt 0,03 bis 0,6 $SO_3X$-Reste vorliegen.

2. Membran nach Anspruch 1, **dadurch gekennzeichnet,** daß sie zusätzlich durch Umsetzung der $SO_3X$-Gruppen mit einem polymeren Amin mit primären oder sekundären oder gemischt sekundären und tertiären Aminfunktionen modifiziert ist.

3. Membran nach Anspruch 2, **dadurch gekennzeichnet**, daß sie mit linearem Polyethylenimin mit einem Molekulargewicht von 600 bis 50 000, vorzugsweise 1000 bis 10.000 Dalton modifiziert ist.

4. Membran nach Anspruch 2, **dadurch gekennzeichnet,** daß sie mit verzweigtem Polyethylenimin oder primäraminoterminalem Polyethylenoxid/Polypropylenoxid mit einem Molekulargewicht von 600 bis 50 000, vorzugsweise 1000 bis 10 000 Dalton modifiziert ist.

5. Membran nach einem der Ansprüche 1 bis 4, **dadurch gekennzeichnet,** daß in dem Polymer pro Einheit der obigen Formel im Durchschnitt 0,07 bis 0,50, vorzugsweise 0,15 bis 0,25 $SO_3X$-Reste vorliegen.

6. Membran nach einem der Ansprüch 1 bis 5, **dadurch gekennzeichnet,** daß in dem Polymer X ein Alkalimetall, vorzugsweise Natrium oder Kalium bedeutet.

7. Membran nach einem der Ansprüche 1 bis 6, **dadurch gekennzeichnet,** daß das Polymer ein Molekulargewicht (Gewichtsmittel) im Bereich von 20 000 bis 70 000 besitzt.

8. Membran nach Anspruch 7, **dadurch gekennzeichnet,** daß das Polymer ein Molekulargewicht (Gewichtsmittel) im Bereich von 35 000 bis 50 000 besitzt.

9. Membran nach einem der Ansprüche 1 bis 8, **dadurch gekennzeichnet,** daß die Interleukin-1β-Freisetzung aus mononukleären Zellen bei stationären Bedingungen höchstens 1/8 derjenigen von

Cuprophan beträgt.

**10.** Verfahren zur Herstellung einer Membran nach einem der Ansprüche 1 bis 9, **dadurch gekennzeichnet,** daß man Polyphenylsulfon bestehend aus sich wiederholenden Einheiten der Formel

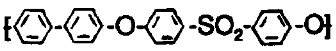

in Lösung einer Konzentration von 5 bis 20 % (Gewicht/Volumen) in einem organischen Lösungsmittel mit Chlorsulfonsäure bei -20 bis +30 °C unter derartiger Abstimmung der Reaktionsbedingungen sulfoniert, daß pro Einheit der obigen Formel im Durchschnitt 0,07 bis 0,6 $SO_3H$-Reste vorliegen, das sulfonierte Polyphenylsulfon durch Zugabe eines Nichtlösungsmittels für das sulfonierte Polyphenylsulfon aus einer Lösung des letzteren in einem organischen Lösungsmittel in Membranform ausfällt, die Membran wäscht und gegebenenfalls die Sulfonsäuregruppen gegen Alkalimetall austauscht.

**11.** Verfahren nach Anspruch 10, **dadurch gekennzeichnet,** daß man der Lösung des sulfonierten Polyphenylsulfons ein polymeres Amin, vorzugsweise in einer Konzentration von 0,5 bis 15 Gew.-%, zusetzt.

**12.** Verfahren nach Anspruch 10, **dadurch gekennzeichnet,** daß man das sulfonierte Polyphenylsulfon mit einer wäßrigen Lösung eines polymeren Amins, vorzugsweise in einer Konzentration von 0,1 bis 50, besonders 0,5 bis 5 Gew.-% des Polyamins, behandelt.

**13.** Verfahren nach Anspruch 11 oder 12, **dadurch gekennzeichnet,** daß man als poiymers Amin ein lineares Polyethylenimin, ein verzweigtes Polyethylenimin oder ein primäraminoterminales Polyethylenoxid/Polypropylenoxid mit einem Molekulargewicht im Bereich von 600 bis 50 000, vorzugsweise 1000 bis 10 000 Daiton verwendet.

**14.** Verfahren nach einem der Ansprüche 11 bis 13, **dadurch gekennzeichnet,** daß man an das durch polymeres Amin modifizierte sulfonierte Polyphenylsulfon in an sich bekannter Weise Heparin kovalent bindet.

**15.** Verfahren nach einem der Ansprüch 10 bis 14, **dadurch gekennzeichnet,** daß man bei einer Temperatur von -10 bis +25 °C sulfoniert.

**16.** Verfahren nach einem der Ansprüch 11 bis 15, **dadurch gekennzeichnet**, daß man die Reaktionsbedingungen so einstellt, daß vor der Ausfällung als Membran keine Gelierung und Vernetzung eintritt.

**17.** Verfahren nach einem der Ansprüche 10 bis 16, **dadurch gekennzeichnet,** daß man das sulfonierte Polyphenylsulfon vor der Membranbildung mit einem Nichtlösungsmittel ausfällt und anschließend in einem Lösungsmittel wieder auflöst.

**18.** Verfahren nach Anspruch 17, **dadurch gekennzeichnet,** daß man als Nichtlösungsmittel Isopropanol, Aceton, Ethanol, Methanol, Essigsäure und/oder Essigsäureanhydrid, insbesondere Isopropanol verwendet.

**19.** Verfahren nach Anspruch 17 oder 18, **dadurch gekennzeichnet,** daß man als Lösungsmittel N-Methylpyrrolidon, N,N-Dimethylacetamid, N,N-Dimethylformamid und/oder Dimethylsulfoxid verwendet.

**20.** Verfahren nach einem der Ansprüche 10 bis 19, **dadurch gekennzeichnet,** daß man die Membranen in einem Phaseninversionsverfahren mit Hilfe eines Nichtlösungsmittels für das Polymer ausfällt.

**21.** Verfahren nach Anspruch 20, **dadurch gekennzeichnet,** daß man das Nichtlösungsmittel für das Polymer im Gemisch mit einem Lösungsmittel für das Polymerlösungsmittel verwendet.

**22.** Verfahren nach Anspruch 20 und 21, **dadurch gekennzeichnet,** daß man als das Nichtlösungsmittel im Phaseninversionsverfahren Wasser, Aceton, Isopropanol, Methanol, Ethanol, Essigsäure und/oder Essigsäureanhydrid, vorzugsweise Wasser, verwendet.

23. Verfahren nach einem der Ansprüche 10 bis 16, **dadurch gekennzeichnet,** daß man als organisches Lösungsmittel der Sulfonierung Methylenchlorid, 1,2-Dichlorethan und/oder Chloroform, vorzugsweise Methylenchlorid, verwendet.

24. Verfahren nach einem der Ansprüche 10 bis 23, **dadurch gekennzeichnet,** daß man dem Lösungsmittel der Sulfonierung 0,1 bis 1 Vol.-% (Volumen/Volumen) Dimethylsulfoxid zusetzt.

Europäisches Patentamt

# EUROPÄISCHER RECHERCHENBERICHT

Nummer der Anmeldung
EP 93 10 8480

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 021 383 (RHONE-POULENC)<br>* Seite 4, Zeile 1 - Zeile 12; Ansprüche 1,3 *<br>--- | 1,10,15<br>19,23 | B01D71/68<br>B01D67/00<br>C08G75/23<br>C08G65/48<br>C08L81/06 |
| A<br><br>D<br>D | EP-A-0 341 473 (AKZO)<br>* Seite 6, Zeile 28 - Zeile 45 *<br>& DE-A-3 814 759<br>& DE-A-3 814 760<br>----- | 1,10,15<br>19,23 | |
| | | | RECHERCHIERTE SACHGEBIETE (Int. Cl.5 ) |
| | | | B01D<br>C08G<br>C08L |

Der vorliegende Recherchenbericht wurde für alle Patentansprüche erstellt

| Recherchenort | Abschlußdatum der Recherche | Prüfer |
|---|---|---|
| BERLIN | 07 OKTOBER 1993 | CORDERO ALVAREZ M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)